(19) Europäisches Patentamt
European Patent Office
Office européen des brevets

(11)  **EP 2 509 391 B1**

(12)  **EUROPEAN PATENT SPECIFICATION**

(45) Date of publication and mention
of the grant of the patent:
**21.08.2013   Bulletin 2013/34**

(51) Int Cl.:
*H04W 88/08* *(2009.01)*

(21) Application number: **12175137.4**

(22) Date of filing: **28.12.2007**

(54) **A synchronization and delay compensation method between baseband unit and radio frequency unit**

Synchronisations- und Verzögerungskompensationsverfahren zwischen  einer Basisbandeinheit und einer Hochfrequenzeinheit

Procédé de synchronisation et de correction de retard entre une unité en bande de base et une unité en radiofréquence

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **29.06.2007   CN 200710123204**

(43) Date of publication of application:
**10.10.2012   Bulletin 2012/41**

(62) Document number(s) of the earlier application(s) in accordance with Art. 76 EPC:
**07855865.7 / 2 173 136**

(73) Proprietor: **ZTE Corporation**
**Shenzhen City, Guangdong Province 518057 (CN)**

(72) Inventors:
• **Zhao, Zhiyong**
**518057 Shenzhen (CN)**
• **Wang, Wei**
**518057 Shenzhen (CN)**
• **Wang, Xinyu**
**518057 Shenzhen (CN)**

(74) Representative: **Anderson, Angela Mary et al**
**Murgitroyd & Company**
**Immeuble Atlantis**
**55 Allée Pierre Ziller**
**Sophia Antipolis**
**06560 Valbonne (FR)**

(56) References cited:
**WO-A1-2006/026891     US-A- 5 473 668**

## Description

Technical Field

The invention relates to wireless communication systems in the field of communications, and more particularly, to a method for synchronization and delay compensation between a baseband system and a radio frequency system of Global System for Mobile communication (GSM) /Enhanced Data Rate for GSM Evolution (EDGE).

Technical Background

GSM/EDGE is a time division multiplexing (TDM) system. Data at wireless ports is received and transmitted in timeslot order. Although 3rd Generation Partnership Project (3GPP) protocol does not require strict timeslot synchronization within the whole network, the wireless ports must maintain timeslot synchronization in a cell or a synchronization cell. In general, a GSM/EDGE base station containing a number of transceivers acquires a synchronization clock source by various manners, such as synchronizing network side clocks, synchronizing global positioning system (GPS) or free oscillation, to ensure that wireless timeslots of all the transceivers are synchronized strictly in the same cell or synchronization cell.

A distributed base station **characterized in that** baseband is separated from radio frequency is different from a traditional base station. A baseband unit and a radio unit of the traditional base station are integrated and delay between them is very small such that data synchronization between the baseband unit and the remote radio unit can be achieved by transmitting synchronized signals via a clock line and the delay can be neglected; whereas baseband units of the distributed base station constitute a shared baseband pool to connect a plurality of Remote Radio Units (RRU) separated far from each other and delay between the baseband units and the plurality of RRUs is larger, thus, data synchronization and delay compensation must be considered in such architecture.

At present, data transmission between the baseband unit and remote radio unit of a radio frequency system is generally realized by a high-speed time division multiplex (TDM) link. There are two kinds of data transmission modes.

The first mode is to define a set of frame formats on the TDM link. The baseband unit (BBU) and remote radio unit (RRU) read and write data by analyzing the frame formats, for example in common public radio interface (CPRI) protocol.

The second mode is to construct a packet on the TDM link. The BBU and RRU read and write data correctly by identifying a packet head, for example in open base station architecture initiative (OBSAI) protocol.

Synchronization methods for the two modes are all implemented strictly by means of a TDM link clock, that is, the link clock is synchronized with the BBU, and then the RRU is synchronized with the link clock to finally achieve synchronization of the RRU with the BBU. However, such protocol only provides a method for link delay measurement and synchronization, it does not specify how to compensate for the delay, especially for delay of a GSM/EDGE system.

Delay compensation may be realized typically by transmitting data in advance or postponing receiving data. However, a transmission protocol format between the BBU and RRU tends to limit the accuracy of delay compensation for minimal granularity requirements of data. Especially in the case of multiplexing a plurality of carriers over the same links, such limitation appears more obvious. For example, if an elementary unit for a frame format in the CPRI protocol is one chip, then minimal granularity of relative delay between different carriers must be one chip such that the accuracy of delay compensation can only reach one chip order.

Signal transmission between the BBU and RRU may use other transmission protocols, and there may be greater difference in their link clocks and frame formats. In such case, performing synchronization strictly by means of the link clock or just simply adjusting the time for transmitting or receiving data can not compensate accurately for link delay between the BBU and RRU and cannot meet the system's accuracy requirements for delay compensation.

Aiming at the problems described above, there is a need for a method for synchronization and delay compensation between a baseband system and a radio frequency system of GSM/EDGE such that signal transmission between the baseband system and the radio frequency system of GSM/EDGE adapts to different transmission protocols and accurate delay compensation can be achieved.

US 5 473 668 discloses an example of delay compensation in a master/slave communication system.

Summary of the Invention

A technical problem solved by the present invention is to provide a method for synchronization and delay compensation between a baseband system and a radio frequency system such that synchronization is realized between the baseband system and radio frequency system, while achieving accurate delay compensation. The problem in prior art that different transmission protocols cannot be adapted to and the accuracy of delay compensation is low is thus resolved.

A baseband unit (BBU) in accordance with the present invention uses a unified reference point clock, which is synchronized with both a system clock of a BBU and a high-speed link clock between the BBU and RRU. For the method in accordance with the present invention, there is no significant difference in transmitting baseband and radio frequency signals over a TDM link between by constructing a frame format and by constructing a packet. Therefore, the method for transmitting data by carrying the packet over the TDM link described herein also applies to data transmission in a fixed frame format.

The present invention further provides a method for synchronization and delay compensation between a baseband system and a radio frequency system to achieve synchronization and delay compensation in downstream direction between a baseband unit and a plurality of remote radio units connected thereto, the method comprises the following steps:

A. calculating, by the baseband unit, a baseband unit downstream offset $\Delta T_{dl}$ and a remote radio unit downstream offset $\delta_{dl}$, with a unified reference point clock as reference and $\Delta T_{dl}$ as an offset, inserting a downstream synchronization label into a downstream data link and sending the downstream synchronization label and downstream data to the remote radio unit $\Delta T_{dl}$ in advance or $(T_{syn}-\Delta T_{dl})$ late, and sending $\delta_{dl}$ to the remote radio unit via an upper layer signaling channel, wherein $T_{syn}$ is a system synchronization clock period; and

B. extracting and recovering, by the remote radio unit, a link clock between the baseband unit and the remote radio unit, acquiring the downstream synchronization label and the remote radio unit downstream offset $\delta_{dl}$, postponing triggering a synchronization clock for $\delta_{dl}$ after reading a last bit of a data synchronization head in the downstream synchronization label based on the acquired link clock, to synchronize a local system clock with the generated synchronization clock.

Further, the step A may further divide into:

A1. calculating, by the baseband unit, a downstream link delay $\tau$ between the baseband unit and the remote radio unit in a downstream link and dividing the delay into the baseband unit downstream offset $\Delta T_{dl}$ and the remote radio unit downstream offset $\delta_{dl}$, wherein $\Delta T_{dl} = \left(\left\lfloor \tau/\kappa \right\rfloor +1\right)\times \kappa$, $\delta_{dl} = \Delta T_{dl} - \tau$, and is $\kappa$ a minimal granularity duration of a frame format of a transmission link;

A2. inserting, by the baseband unit, the downstream synchronization label into the downstream data link between the baseband unit and the remote radio unit by using the unified reference point clock as reference, the offset between the downstream synchronization label and the reference point clock being $\Delta T_{dl}$, and sending by the baseband unit, the downstream synchronization label and the downstream data $\Delta T_{dl}$ in advance or $(T_{syn}-\Delta T_{dl})$ late, wherein $T_{syn}$ is the system synchronization clock period; and

A3. sending, by the baseband unit, $\delta_{dl}$ to the remote radio unit via the upper layer signaling channel.

Further, the downstream synchronization label contains a data packet head, data payload and CRC, wherein:

the data payload comprises a data synchronization head which is a fixed special byte;
the CRC is a check for content of the data packet; and
the data packet head contains:

an address, comprising a source address being an address of the baseband unit and a destination address being an address of the remote radio unit;
a data type, representing a type of the data in the data packet, the data type in the downstream synchronization label being synchronization packet;
a time stamp, whose value is associated with the data type, representing a beginning and ending frame number and a timeslot number of a downstream timeslot between two consecutive synchronization labels if the data type is synchronization packet; and
a data length representing information of a length of the data.

Further, the step B may further divide into:

B1. extracting and recovering, by the remote radio unit, the link clock between the baseband unit and the remote radio unit, finding synchronization data labels belonging to the remote radio unit based on information of the address and data type contained in the data packet head, then reading and comparing the data synchronization head, and extracting information of the frame number and the timeslot number in the time stamp;
B2. generating, by the remote radio unit, the synchronization clock based on the data synchronization head in the downstream synchronization label, the link clock and the remote radio unit downstream offset $\delta_{dl}$, that is, postponing triggering the synchronization clock for $\delta_{dl}$ after reading the last bit of the data synchronization head based on the link clock; and

B3. synchronizing, by the remote radio unit, the local system clock with the generated synchronization clock to achieve clock synchronization between the remote radio unit and the base unit.

The method described above may also be used when signals between the BBU and RRU are transmitted by constructing a frame format. The only difference is that the upstream and downstream synchronization labels contains no packet head, but the synchronization data head (SynData) and the frame number and timeslot number, and the BBU and RRU determine positions of synchronization labels by searching for the SynData in the links and generate the synchronization clock of the RRU or the receiving interrupt of the BBU. Other steps of synchronization and delay compensation are the same as those in the technical scheme described herein.

The method for synchronization and delay compensation according to the present invention implements synchronization between the BBU and RRU through time labels based on a high-speed link between the BBU and RRU. Specifically, in a downstream direction, link delay compensation is realized by two-level delay adjustment of the BBU and RRU. The method according to the present invention realizes synchronization and accurate delay compensation between the baseband system and radio frequency system. Such method may allow signals between the baseband unit and the remote radio unit of GSM/EDGE to adapt to different transmission protocols. In addition, the method also applies to data transmission in a fixed frame format.

Brief Description of the Drawings

Fig.1 is schematic diagram of implementing synchronization and delay compensation between the baseband unit (BBU) and the remote radio unit (RRU) in accordance with an embodiment of the present invention; and

Fig.2 is a schematic diagram of a synchronization label format in accordance with an embodiment of the present invention.

Preferred Embodiments of the Invention

The method for synchronization and delay compensation in accordance with the present invention will be described below in conjunction with the accompany drawings and specific embodiments.

The method for synchronization and delay compensation according to the present invention implements synchronization between a BBU and RRU through time labels based on a high-speed link between the BBU and RRU. Specifically, in a downstream direction, link delay compensation is realized by two-level delay adjustment of the BBU and RRU; in an upstream direction, link delay is compensated via generating baseband receiving interrupt by data driving. Such method may allow signals between the baseband unit and the remote radio unit of GSM/EDGE to adapt to different transmission protocols.

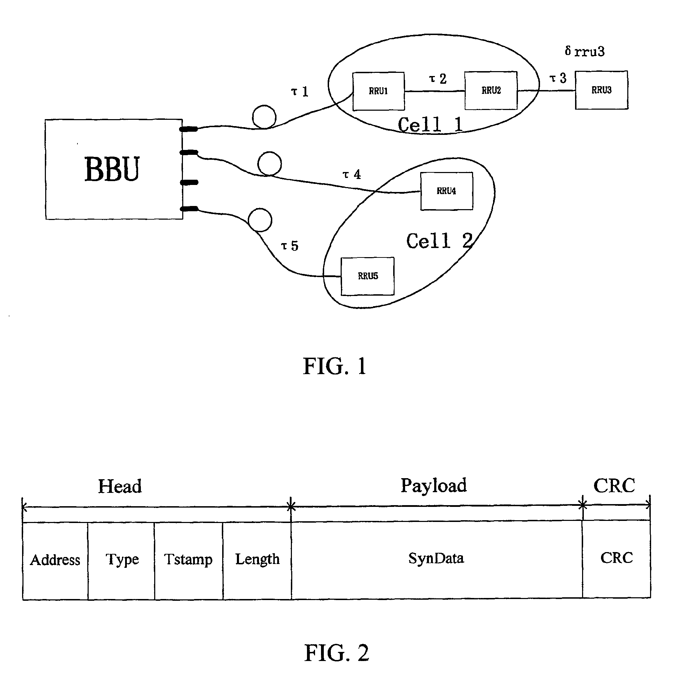

In an architecture where a baseband unit and a remote radio unit is separated, baseband capacity is large and one baseband unit or baseband pool may be connected to a plurality of remote radio units, which are distributed in different physical areas and connect with the baseband unit via a high-speed TDM link. The RRUs located in different geographical positions may be configured to be synchronized cells or asynchronized cells according to requirement. A networking schematic diagram illustrating the connection between a baseband unit (BBU) and a plurality of remote radio unit (RRU) is shown in Fig.1. In Fig.1, RRU1, RRU2 and RRU3 are connected to the BBU by cascaded fibers, and the connections of RRU4 and RRU5 with BBU are point-to-point connections. Of course, the networking between the RRU and BBU may be in other network forms, such as ring network and tree network. Because the fiber lengths between the BBU and the RRUs, and the fiber lengths between cascaded RRUs are different, delays generated by fiber links are different.

There are many methods for measuring delay between the BBU and the RRU. For example, some organizations, such as CPRI and PBSAI, provide methods for measuring delay. The present invention will not further set forth delay measurement. Fiber link delay between the BBU and RRU, processing delay of the RRU and delays between optical ports and between an optical port and an antenna port in the RRU are all regarded as known quantities and may be measured using existing measurement methods, which is not a section emphatically discussed herein.

The BBU according to the present invention uses a unified reference point clock, which is synchronized with both a system clock of the BBU and a high-speed link clock between the BBU and RRU. For the method in accordance with the present invention, there is no significant difference in transmitting baseband and radio frequency signals over a TDM link between by constructing a frame format and by constructing a packet. Therefore, the method for transmitting data by carrying the packet over the TDM link described herein also applies to data transmission in a fixed frame format.

In the method for synchronization and delay compensation between the baseband system and the radio frequency system in accordance with the present invention, the specific processes in the downstream direction and upstream direction are described as below.

1. in the downstream direction

1) A BBU calculates downstream link delay between the BBU and a RRU in a downstream link, then divides the delay into a BBU downstream offset $\Delta T_{dl}$ and a RRU downstream offset $\delta_{dl}$, where the accuracy of $\Delta T_{dl}$ equals to minimal data granularity duration of a frame format in the downstream link between the BBU and RRU, $\delta_{dl}$ is the difference between $\Delta T_{dl}$ and actual downstream link delay, its accuracy meets a GSM/EDGE system's accuracy requirement for synchronization.

2) The BBU inserts a downstream synchronization label into the downstream data link between the BBU and the RRU by using a unified reference point clock as reference. The offset between the downstream synchronization label and the reference point clock is $\Delta T_{dl}$. The BBU sends the downstream synchronization label and downstream data $\Delta T_{dl}$ in advance or $(T_{syn}-\Delta T_{dl})$ late, where $T_{syn}$ is a GSM/EDGE synchronization clock period. As shown in Fig. 2, the downstream synchronization label contains Head, Payload and CRC. Wherein,

The Head contains Address, Type, time stamp (Tstamp) and Length.

In the Head, the Address includes a source address (address of the BBU) and a destination address (address of the RRU). The Type represents the type of the Payload, such as synchronization packet, service packet, control packet, idle packet, etc. The Type in the downstream synchronization label is synchronization packet. The meaning of Tstamp is associated with the Type. When the Type is synchronization packet, the Tstamp represents a beginning and ending frame number and a timeslot number of a downstream timeslot between two continuous synchronization labels; when the Type is service packet or control packet, the Tstamp represents relative time order of the Payload.

The Payload includes a data synchronization head (SynData) which is a fixed special byte determined by BBU and RRUs. That the byte is special refers to that the byte is different from generic IQ (in-phase and quadrature) data, such as a set of fixed numbers 7FFFFFF with large value (such byte may be generated in random sequence, and its bit number is determined according to requirement, the more the bits, the less the probability that the byte is the same as other IQ data). The byte is fixed, because it has been determined by the BBU and the RRU in advance and will not change between two adjacent determinations.

CRC bit is used for cyclic redundancy checking for content of a packet.

3) The BBU sends $\delta_{dl}$ to the RRU via an upper layer signaling channel, such as HDLC signaling channel or Ethernet signaling channel in the CPRI protocol.

4) The RRU extracts and recovers a link clock between the BBU and the RRU, finds synchronization data labels belonging to the RRU based on information on the Address and Type contained in the Head, then reads and compares the SynData, and extracts information of the frame number and the timeslot number in the Tstamp.

5) The RRU generates a synchronization clock based on the Syndata in the downstream synchronization label, the link clock and the RRU downstream offset $\delta_{dl}$, that is, postpones triggering synchronization clock for $\delta_{dl}$ after reading the last bit of the SynData based on the link clock. Then, the RRU synchronizes the local system clock with the generated synchronization clock to achieve clock synchronization between the RRU and the BBU.

2. in the upstream direction

6) The RRU stores the frame number and the timeslot number of downstream data, then transmits the data from an antenna port, then receives upstream data and generates a upstream synchronization label after a delay of 3 timeslots of GSM/EDGE based on the system clock synchronized with the BBU, and sends the upstream synchronization label and the upstream data to the BBU via the upstream link.

As shown in Fig. 2, the upstream synchronization label also contains Head, Payload and CRC. Wherein,

The Head contains Address, Type, time stamp (Tstamp) and Length.

In the Head, the Address includes a source address (address of the BBU) and a destination address (address of the RRU). The Type represents the type of the Payload, such as synchronization packet, service packet, control packet, idle packet, etc. The Type in the upstream synchronization label is synchronization packet. The meaning of Tstamp is associated with the Type. When the Type is synchronization packet, the Tstamp represents a beginning and ending frame number and a timeslot number of an upstream timeslot between two continuous synchronization labels; when the Type is service packet or control packet, the Tstamp represents relative time order of the Payload. In the upstream synchronization label, the frame number and timeslot number in the Tstamp are the same as those of the downstream data stored by the RRU.

The Payload includes a data synchronization head (SynData) which is a fixed special byte determined by the baseband and remote radio units. That the byte is special refers to that the byte is different from generic IQ (in-phase and quadrature) data, such as a set of fixed numbers 7FFFFFF with large value (such byte may be generated in random sequence, and its bit number is determined according to requirement, the more the bits, the less the probability that the byte is the same as other IQ data). The byte is fixed, because it has been determined by the BBU and the RRU in advance and will not change between two adjacent determinations. CRC bit is used for cyclic redundancy checking for content of a packet.

7) The BBU receives the upstream synchronization label from the RRU based on the Address and Type of the packet, extracts the data synchronization head (SynData) from the packet, and then compares the extracted SynData with the determined data synchronization head to verify validity of the upstream synchronization label. The BBU extracts information of the frame number and timeslot number in the Tstamp if the SynData is valid or repeats the step 7) if the SynData is invalid. If the BBU still cannot find a valid synchronization label within a certain time threshold, it will report a synchronized alert to an upper layer software. The purpose of comparing the data synchronization head is to determine whether the data synchronization head is correct. Because the data synchronization head (SynData) is a fixed special byte, the BBU compares the extracted SynData with its stored SynData to verify their consistence. The BBU confirms validity of the synchronization label if they are consistent, otherwise continues to search for upstream synchronization labels and compare the upstream Syndata, and reports an alert when no valid synchronization label is found within a predetermined time period.

8) The BBU generates interrupt based on arrival time of the SynData in the upstream synchronization label. The baseband unit receives the upstream data and information of the frame number and timeslot number based on the interrupt and compares the upstream frame number and timeslot number with the downstream frame number and timeslot number.

The frame number and timeslot number are all continuous and periodic. The purpose of extracting the upstream and downstream frame numbers and timeslot numbers is to allow the BBU to be aware of the corresponding relationship between the upstream timeslot and the downstream timeslot. According to a GSM/EDGE protocol, data for a number of users is all carried by timeslots at a wireless port, with each timeslot or every several timeslots carrying service data for one user. The upstream timeslot carrying service data for one user is 3 timeslots later than the downstream timeslot carrying service data for the same user. For example, if the $N^{th}$ timeslot of the $M^{th}$ frame in a downstream direction of a wireless port of a base station (the RRU in the present invention) carries service data for User A, then the upstream timeslot received 3 timeslots late must carry upstream service data for User A. In order to identify and distinguish the various cases where the upstream and downstream timeslots carry data for users, it is specified in the GSM/EDGE protocol that relative to the downstream timeslot, the upstream timeslot (the timeslot occupied by upstream service data for User A) received 3 timeslots late is still represented by the $N^{th}$ timeslot of the $M^{th}$ frame. In the present invention, the upstream and downstream frame numbers and timeslot numbers are all placed in the Tstamp, that is, the BBU sends the frame number and the timeslot number of the downstream timeslot or beginning and ending frame numbers and timeslot numbers of a plurality of timeslots to the RRU through the Tstamp, and the RRU stores the frame numbers and timeslot umbers and transmits the downstream timeslot from the wireless port. The upstream timeslot is received 3 timeslots later than the downstream timeslot, and then the upstream synchronization label, in which the frame number and timeslot number of the Tstamp are the downstream frame number and timeslot number stored by the RRU, is added.

According to the processes described herein, in the downstream direction, synchronization between the BBU and RRU is achieved by the downstream synchronization label, specifically, the RRU generates a synchronization clock after receiving the downstream synchronization label, and then the local system clock of the RRU is synchronized with this synchronization clock, thereby realizing synchronization between the BBU and RRU. Downstream delay compensation is realized by two-level time adjustment, as described below.

(1) The first level adjustment is implemented in the BBU. As described in step 2), the BBU adjusts the downstream offset $\Delta T_{dl}$, which is calculated based on downstream transmission link delay between the BBU and RRU. The BBU sends the downstream synchronization label and data $\Delta T_{dl}$ in advance or late and compensates for the transmission link delay. Due to the limitation of minimal granularity duration of a frame format in a transmission link and carrier multiplexing, there may be no integral multiple relationship between actual transmission link delay $\tau$ and the minimal granularity duration $\kappa$ of the frame format of the transmission link. $\Delta T_{dl}$ is defined as follows according to the present invention:

$$\Delta T_{dl} = \left( \lfloor \tau / \kappa \rfloor + 1 \right) \times \kappa \ .$$

That is, the result of $\tau/\kappa$ is rounded towards the bigger integral (where [ ] represents rounding down, and [$\tau/\kappa$] +1 represents rounding up). Therefore, the BBU downstream offset $\Delta T_{dl}$ cannot compensate accurately for the downstream transmission link delay. The first level delay compensation is coarse compensation. Because $\Delta T_{dl}$ in the above formula is larger than actual delay, the first delay compensation in the BBU is also called over compensation.

(2) The second level compensation is implemented in the RRU. The BBU calculates the difference between the downstream transmission link delay $\tau$ and $\Delta T_{dl}$, i.e., the RRU downstream offset $\delta_{dl}$, where $\delta_{dl} = \Delta T_{dl} - \tau$. Then, $\delta_{dl}$ is sent to the RRU by the BBU via an upper layer signaling channel. When the second level compensation is implemented, as described in step 5), the RRU generates a synchronization clock based on the downstream synchronization label after a delay of $\delta_{dl}$.

The downstream transmission link delay may be obtained accurately through the two-level delay compensation described herein to achieve synchronization between the RRU and BBU.

An advantage of the method according to the present invention consists in that by using time labels as synchronization media of the BBU and RRU, the BBU and RRU's requirements for the link clock and frame format are decreased and various transmission links may be used between the BBU and RRU of GSM/EDGE, thereby reducing system cost. The setting of downstream two-level delay compensation offset is able to compensate accurately for the downstream link delay, which also decreases requirement for link multiplexing data granularity.

After the downstream link delay is compensated, the system clock of the RRU is synchronized with the BBU, and downstream transmitting and upstream receiving in a GSM/EDGE system use the system clock of the RRU as reference. According to the 3GPP protocol, the difference between the upstream and downstream transceiving clocks for the same user in the GSM/EDGE system is three timeslots, that is, relative to the downstream transmitting, the upstream data from this user may be received 3 timeslots late. The RRU stores a frame number and a timeslot number of a timeslot in a downstream synchronization label, fills the frame number and the timeslot number into an upstream synchronization label after a delay of 3 timeslots, and sends them to the BBU along with data of an upstream timeslot.

The BBU analyzes the upstream synchronization label through the method described in step 7) - 8) and triggers receiving interrupt thereof. The BBU demodulates the received data and compares the upstream frame number and timeslot number with the downstream frame number and timeslot number. Upstream receiving can allow the data to be received correctly without upstream link delay compensation in the BBU and RRU.

Synchronization between the RRU and BBU in the upstream link is achieved via the upstream synchronization labels. Moreover, upstream and downstream synchronization reference of GSM/EDGE is realized in the RRU such that upstream link delay becomes system internal delay. The present invention implements correct receiving of baseband data without upstream delay compensation by triggering data receiving interrupt of the BBU using synchronization labels and tracking and comparing the frame numbers and timeslot numbers.

The method described herein may also be used when signals between the BBU and RRU are transmitted by constructing a frame format. The only difference is that the upstream and downstream synchronization labels do not contain the Head but the SynData and the frame number and timeslot number. In addition, the BBU and RRU determine positions of synchronization labels by searching for the SynData in links and generate a synchronization clock of the RRU, or receiving interrupt of the BBU. Other steps of synchronization and delay compensation are the same as those in the method described above.

Specific application example 1

Assume that, as shown in Fig.1, in networking of a baseband unit (BBU) and a remote radio unit (RRU) of a GSM/EDGE system, a synchronization clock of the BBU and RRU is 60 millisecond (ms), minimal multiplexing unit duration of a frame format in a high-speed TDM link between the BBU and RRU is $\kappa$ (microsecond), the measurement accuracy of link delay is less than 4 nanosecond (ns) and link delay between RRU1 and the BBU is $\tau1$ (taking microsecond as a unit).

Taking RRU1 as an example, steps of the method for synchronization and delay compensation in accordance with the present invention will be described below based on the networking shown in Fig. 1 and the set parameters described above.

Step 1: the BBU first calculates link delay between the BBU and RRU1, which is $\tau1$, to obtain two-level delay compensation offsets $\Delta T_{dl}$ and $\delta_{dl}$ (taking microsecond as a unit) of the BBU and RRU1, respectively:

$$\Delta T_{dl} = \left(\left[\tau1/\kappa\right]+1\right)\times\kappa \qquad \delta_{dl} = \left(\Delta T_{dl} - \tau1\right)$$

Step 2: synchronization and delay compensation in a downstream direction are completed.

1) in a downstream direction, the BBU inserts a downstream synchronization label and downstream data into a link $\Delta T_{dl}$ in advance relative to a local synchronization clock of 60ms.

The synchronization label, which contains Address, Type, Length, SynData composed of fixed special characters, a frame number and a timeslot number of a timeslot within 60 ms, and CRC information, is sent every 60ms. The frame number and timeslot number represent a beginning and ending frame number and timeslot number of each timeslot transmitted between two continuous synchronization labels.

2) The BBU sends $\delta_{dl}$ to the RRU1 via an upper layer signaling channel, such as HDLC signaling channel or Ethernet signaling channel in the CPRI protocol.
3) RRU1 receives data sent by the BBU based on the Address and Type of a packet, and extracts and compares the SynData composed of fixed special characters. RRU1 generates a synchronization clock of 60ms $\delta_{dl}$ late from the time at which the last bit of the SynData in the downstream synchronization label is received, and then synchronizes its local system clock (52MHz) with 60ms to realize synchronization of RRU1 and the BBU.

Step 3: synchronization and delay compensation in an upstream direction are completed.

4) RRU1 analyzes the downstream frame number and timeslot number and stores them.
5) RRU1 generates all the clocks transmitted and received by GSM/EDGE based on the local clock of 60 ms, and then transmits all the timeslots in order. According to specifications in the protocol, the upstream receiving clock at a wireless port of RRU1 is three timeslots later than the downstream transmitting clocks. RRU1 inserts the upstream synchronization label into an upstream link after receiving data about upstream timeslots.

The upstream synchronization label contains Address, Type, Length, SynData composed of fixed special characters, a frame number and a timeslot number, and CRC information, is sent every 60ms. The frame number and timeslot number are the frame number and timeslot number of the downstream synchronization label stored by RRU1. The upstream synchronization label is sent every 60ms.

6) The BBU receives the upstream synchronization label based on the Address and Type of the packet, extracts and compares the SynData composed of fixed special characters, and triggers the interrupt indicating the BBU beginning to receive the upstream data. The interval of the interrupt is 15/26ms.
7) The baseband unit receives data based on the interrupt and compares the upstream frame number and timeslot number with the downstream frame number and timeslot number to determine whether they are consistent.

RRU1 realizes synchronization and delay compensation between the baseband unit and remote radio unit of GSM/EDGE by the method described herein.
Other RRUs function likewise, except for cascaded RRUs. For example, downstream link delay of RRU2 is $\tau1+\tau_{r1}+\tau2$, where $\tau_{r1}$ is processing delay of RRU1 and $\tau2$ is link delay between RRU1 and RRU2. All of the RRUs is synchronized with the BBU and delays from these RRUs to the wireless port are equal. Thus, RRU1 is synchronized with RRU2 in cell 1, and cell 1 is synchronized with cell 2 as well.

Industrial Applicability

A method for synchronization and delay compensation between a baseband system and a radio frequency system according to the present invention applies to synchronization and delay compensation between the baseband system and radio frequency system of Global System for Mobile communication (GSM) /Enhanced Data Rate for GSM Evolution (EDGE). Based on a high-speed link between a baseband unit (BBU) and a remote radio unit (RRU), synchronization is realized between the BBU and the RRU by upstream and downstream time labels. The present invention implements synchronization and accurate delay compensation between the baseband system and radio frequency system such that signals between the baseband unit and the remote radio unit of GSM/EDGE can adapt to different transmission protocols. The method also applies to data transmission in a fixed frame format.

**Claims**

**1.** A method for synchronization and delay compensation between a baseband system and a radio frequency system,

to achieve synchronization and delay compensation in downstream direction between a baseband unit and a plurality of remote radio units connecting thereto, **characterized by** comprising the following steps of:

A. calculating, by the baseband unit, a baseband unit downstream offset $\Delta$Tdl and a remote radio unit downstream offset $\delta$dl, with a unified reference point clock as a reference and $\Delta$Tdl as an offset, inserting a downstream synchronization label into a downstream data link and sending the downstream synchronization label and downstream data to the remote radio unit $\Delta$Tdl in advance or Tsyn-$\Delta$Tdl late, and sending $\delta$dl to the remote radio unit via an upper layer signaling channel, wherein Tsyn is a system synchronization clock period; and

B. extracting and recovering, by the remote radio unit, a link clock between the baseband unit and the remote radio unit, acquiring the downstream synchronization label and the remote radio unit downstream offset $\delta$dl, postponing triggering a synchronization clock for $\delta$dl after reading a last bit of a data synchronization head in the downstream synchronization label based on the acquired link clock, to synchronize a local system clock with the generated synchronization clock.

2. The method according to claim 1, wherein the step A further divides into:

A1. calculating, by the baseband unit, a downstream link delay $\tau$* between the baseband unit and the remote radio unit in a downstream link, and dividing the delay into the baseband unit downstream offset $\Delta$Tdl and the remote radio unit downstream offset $\delta$dl, wherein

$$\Delta T_{dl} = \left( \lfloor \tau / \kappa \rfloor + 1 \right) \times \kappa \, , \quad \delta_{dl} = \Delta T_{dl} - \tau \, , \quad \text{and } \kappa \text{ is a minimal granularity duration of a frame format of a}$$

transmission link;

A2. inserting, by the baseband unit, the downstream synchronization label into the downstream data link between the baseband unit and the remote radio unit by using the unified reference point clock as reference, the offset between the downstream synchronization label and the reference point clock being $\Delta$Tdl, and sending, by the baseband unit, the downstream synchronization label and the downstream data $\Delta$Tdl in advance or Tsyn - $\Delta$Tdl late, wherein Tsyn is the system synchronization clock period; and

A3. sending, by the baseband unit, $\delta$dl to the remote radio unit via the upper layer signaling channel.

3. The method according to claim 1 or 2, wherein the downstream synchronization label contains a data packet head, data payload and CRC, and wherein:

the data payload comprises a data synchronization head which is a fixed special byte;
the CRC is a check for content of the data packet; and
the data packet head contains:

an address, comprising a source address being an address of the baseband unit and a destination address being an address of the remote radio unit;
a data type, representing a type of the data in the data packet, the data type in the downstream synchronization label being synchronization packet;
a time stamp, whose value is associated with the data type, representing a beginning and ending frame number and a timeslot number of a downstream timeslot between two consecutive synchronization labels if the data type is synchronization packet; and
a data length, representing information of a length of the data.

4. The method according to claim 3, wherein the step B further divides into:

B1. extracting and recovering, by the remote radio unit, the link clock between the baseband unit and the remote radio unit, finding synchronization data labels belonging to the remote radio unit based on information of the address and data type contained in the data packet head, then reading and comparing the data synchronization head, and extracting information of the frame number and the timeslot number in the time stamp;

B2. generating, by the remote radio unit, a synchronization clock based on the data synchronization head in the downstream synchronization label, the link clock and the remote radio unit downstream offset $\delta$dl, that is, postponing triggering the synchronization clock for $\delta$dl after reading the last bit of the data synchronization head based on the link clock; and

B3. synchronizing, by the remote radio unit, the local system clock with the generated synchronization clock to achieve clock synchronization between the remote radio unit and the baseband unit.

**Patentansprüche**

1. Ein Verfahren zur Synchronisation und Verzögerungskompensation zwischen einem Basisbandsystem und einem Hochfrequenzsystem, um Synchronisation und Verzögerungskompensation in Abwärtsrichtung zwischen einer Basisbandeinheit und einer Vielzahl von damit verknüpften, entfernten Hochfrequenzeinheiten zu erreichen, **dadurch gekennzeichnet, dass** es die folgenden Schritte beinhaltet:

    A. Berechnen, durch die Basisbandeinheit, eines Abwärts-Versatzes $\Delta$Tdl der Basisbandeinheit und eines Abwärts-Versatzes $\delta$dl der entfernten Hochfrequenzeinheit, mit einem vereinheitlichten Bezugspunkttakt als ein Bezug und $\Delta$Tdl als ein Versatz, Einfügen eines Abwärts-Synchronisationskennsatzes in eine Abwärts-Datenverbindung und Senden des Abwärts-Synchronisationskennsatzes und der Abwärtsdaten an die entfernte Hochfrequenzeinheit $\Delta$Tdl vorab oder Tsyn-$\Delta$Tdl spät und Senden von ödl an die entfernte Hochfrequenzeinheit über einen Oberschicht-Signalisierungskanal, wobei Tsyn eine Systemsynchronisationstaktperiode ist; und
    B. Extrahieren und Beziehen, durch die entfernte Hochfrequenzeinheit, eines Verbindungstaktes zwischen der Basisbandeinheit und der entfernten Hochfrequenzeinheit, Erfassen des Abwärts-Synchronisationskennsatzes und des Abwärts-Versatzes ödl der entfernten Hochfrequenzeinheit, Aufschieben des Auslösens eines Synchronisationstaktes für $\delta$dl nach dem Lesen eines letzten Bits eines Datensynchronisationskopfes in dem Abwärts-Synchronisationskennsatz, basierend auf dem erfassten Verbindungstakt, um einen lokalen Systemtakt mit dem erzeugten Synchronisationstakt zu synchronisieren.

2. Verfahren gemäß Anspruch 1, wobei Schritt A ferner folgendermaßen aufgeteilt ist:

    A1. Berechnen, durch die Basisbandeinheit, einer Abwärts-Verbindungsverzögerung $\tau$ zwischen der Basisbandeinheit und der entfernten Hochfrequenzeinheit in einer Abwärts-Verbindung und Aufteilen der Verzögerung in den Abwärts-Versatz $\Delta$Tdl der Basisbandeinheit und den Abwärts-Versatz $\delta$dl der entfernten Hochfrequenzeinheit, wobei

    $\Delta T_{dl} = (|\tau / \kappa| + 1)\times\kappa, \delta_{dl} = \Delta T_{dl} - \tau,$ und wobei $\kappa$ eine minimale Granularitätsdauer eines Rahmenformats einer Übertragungsverbindung ist;

    A2. Einfügen, durch die Basisbandeinheit, des Abwärts-Synchronisationkennsatzes in die Abwärts-Datenverbindung zwischen der Basisbandeinheit und der entfernten Hochfrequenzeinheit unter Verwendung des vereinheitlichten Bezugspunkttaktes als Bezug, wobei der Versatz zwischen dem Abwärts-Synchronisationskennsatz und dem Bezugspunkttakt $\Delta$Tdl ist, und Senden, durch die Basisbandeinheit, des Abwärts-Synchronisationskennsatzes und der Abwärtsdaten $\Delta$Tdl vorab oder Tsyn-$\Delta$Tdl spät, wobei Tsyn die Systemsynchronisationstaktperiode ist; und
    A3. Senden, durch die Basisbandeinheit, von $\delta$dl an die entfernte Hochfrequenzeinheit über den Oberschicht-Signalisierungskanal.

3. Verfahren gemäß Anspruch 1 oder 2, wobei der Abwärts-Synchronisationskennsatz einen Datenpaketkopf, Nutzdaten und CRC enthält und wobei:

    die Nutzdaten einen Datensynchronisationskopf beinhalten, welcher ein festes spezielles Byte ist;
    die CRC eine Prüfung auf den Inhalt des Datenpakets ist; und
    der Datenpaketkopf Folgendes enthält:

        eine Adresse, die eine Quellenadresse, die eine Adresse der Basisbandeinheit ist, und eine Zieladresse, die eine Adresse der entfernten Hochfrequenzeinheit ist, beinhaltet;
        einen Datentyp, der einen Typ Daten in dem Datenpaket darstellt, wobei der Datentyp in dem Abwärts-Synchronisationskennsatz ein Synchronisationspaket ist;
        einen Zeitstempel, dessen Wert mit dem Datentyp assoziiert ist, der eine Anfangs- und Endrahmennummer und eine Zeitschlitznummer eines Abwärts-Zeitschlitzes zwischen zwei aufeinanderfolgenden Synchronisationskennsätzen, wenn der Datentyp ein Synchronisationspaket ist, darstellt; und
        eine Datenlänge, die Informationen über eine Länge der Daten darstellt.

4. Verfahren gemäß Anspruch 3, wobei Schritt B ferner folgendermaßen aufgeteilt ist:

    B1. Extrahieren und Beziehen, durch die entfernte Hochfrequenzeinheit, des Verbindungstaktes zwischen der Basisbandeinheit und der entfernten Hochfrequenzeinheit, Finden der Synchronisationsdatenkennsätze, die zu der entfernten Hochfrequenzeinheit gehören, basierend auf Informationen der Adresse und des Datentyps, die in dem Datenpaketkopf enthalten sind, anschließendes Lesen und Vergleichen des Datensynchronisationskopfes und Extrahieren von Informationen der Rahmennummer und der Zeitschlitznummer in dem Zeitstempel;

B2. Erzeugen, durch die entfernte Hochfrequenzeinheit, eines Synchronisationstaktes, basierend auf dem Datensynchronisationskopf in dem Abwärts-Synchronisationskennsatz, dem Verbindungstaktes und dem Abwärts-Versatz δdl der entfernten Hochfrequenzeinheit, das heißt, Aufschieben des Auslösens des Synchronisationstaktes für δdl nach dem Lesen des letzten Bits des Datensynchronisationskopfes, basierend auf dem Verbindungstakt; und

B3. Synchronisieren, durch die entfernte Hochfrequenzeinheit, des lokalen Systemtaktes mit dem erzeugten Synchronisationstakt, um eine Taktsynchronisation zwischen der entfernten Hochfrequenzeinheit und der Basisbandeinheit zu erreichen.

## Revendications

1. Un procédé destiné à la synchronisation et à la compensation de retard entre un système en bande de base et un système de radio fréquence, afin d'obtenir une synchronisation et une compensation de retard dans la direction aval entre une unité en bande de base et une pluralité d'unités radio à distance se connectant à celle-ci, **caractérisé par** le fait de comprendre les étapes suivantes consistant en :

   A. l'unité en bande de base calcule un décalage aval d'unité en bande de base ΔTdl et un décalage aval d'unité radio à distance δdl, avec une horloge faisant point de référence unifiée comme référence et ΔTdl comme décalage, insère une étiquette de synchronisation aval dans une liaison de données descendante et envoie l'étiquette de synchronisation aval et les données aval à l'unité radio à distance en avance de ΔTdl ou en retard de Tsyn-ΔTdl, et envoie δdl à l'unité radio à distance via un canal de signalisation de couche supérieure, Tsyn étant une période d'horloge de synchronisation système ; et

   B. l'unité radio à distance extrait et récupère une horloge de liaison entre l'unité en bande de base et l'unité radio à distance, acquiert l'étiquette de synchronisation aval et le décalage aval d'unité radio à distance δdl, reporte le déclenchement d'une horloge de synchronisation de δdl après lecture d'un dernier bit d'une tête de synchronisation de données dans l'étiquette de synchronisation aval sur la base de l'horloge de liaison acquise, afin de synchroniser une horloge système locale sur l'horloge de synchronisation générée.

2. Le procédé selon la revendication 1, dans lequel l'étape A se divise plus avant en :

   A1. l'unité en bande de base calcule un retard de liaison descendante $\tau$ entre l'unité en bande de base et l'unité radio à distance dans une liaison descendante et divise le retard en décalage aval d'unité en bande de base ΔTdl et décalage aval d'unité radio à distance δdl, où

   $$\Delta T_{dl} = (\lfloor \tau / \kappa \rfloor + 1) x \kappa, \delta_{dl} = \Delta T_{dl} - \tau$$, et $\kappa$ est une durée de granularité minimale d'un format de trame d'une liaison de transmission ;

   A2. l'unité en bande de base insère l'étiquette de synchronisation aval dans la liaison de données descendante entre l'unité en bande de base et l'unité radio à distance en se servant de l'horloge faisant point de référence unifiée comme référence, le décalage entre l'étiquette de synchronisation aval et l'horloge faisant point de référence étant ΔTdl, et l'unité en bande de base envoie l'étiquette de synchronisation aval et les données aval en avance de ΔTdl ou en retard de Tsyn-ΔTdl, Tsyn étant la période d'horloge de synchronisation système ; et

   A3. l'unité en bande de base envoie δdl à l'unité radio à distance via le canal de signalisation de couche supérieure.

3. Le procédé selon la revendication 1 ou la revendication 2, dans lequel l'étiquette de synchronisation aval contient une tête de paquet de données, une charge utile de données (payload) et un CRC, et dans lequel :

   la charge utile de données comprend une tête de synchronisation de données, laquelle est un octet spécial fixe ;
   le CRC est un contrôle du contenu du paquet de données ; et
   la tête de paquet de données contient :

      une adresse, comprenant une adresse source, laquelle est une adresse de l'unité en bande de base, et une adresse destination, laquelle est une adresse de l'unité radio à distance ;

un type de données, représentant un type des données dans le paquet de données, le type de données dans l'étiquette de synchronisation aval étant paquet de synchronisation ;

une estampille temporelle, dont la valeur est associée au type de données, représentant un numéro de trame de début et de fin et un numéro de tranche de temps d'une tranche de temps aval entre deux étiquettes de synchronisation consécutives si le type de données est paquet de synchronisation ; et

une longueur de données, représentant des informations relatives à une longueur des données.

4. Le procédé selon la revendication 3, dans lequel l'étape B se divise plus avant en :

B1. l'unité radio à distance extrait et récupère l'horloge de liaison entre l'unité en bande de base et l'unité radio à distance, trouve des étiquettes de données de synchronisation appartenant à l'unité radio à distance sur la base d'informations relatives à l'adresse et au type de données contenues dans la tête de paquet de données, puis lit et compare la tête de synchronisation de données, et extrait des informations relatives aux numéro de trame et numéro de tranche de temps dans l'estampille temporelle ;

B2. l'unité radio à distance génère une horloge de synchronisation sur la base de la tête de synchronisation de données dans l'étiquette de synchronisation aval, de l'horloge de liaison et du décalage aval d'unité radio à distance $\delta dl$, c'est-à-dire reporte le déclenchement de l'horloge de synchronisation de $\delta dl$ après lecture du dernier bit de la tête de synchronisation de données sur la base de l'horloge de liaison ; et

B3. l'unité radio à distance synchronise l'horloge système locale sur l'horloge de synchronisation générée afin d'obtenir une synchronisation d'horloge entre l'unité radio à distance et l'unité en bande de base.

FIG. 1

FIG. 2

**EP 2 509 391 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5473668 A